# EUROPEAN PATENT APPLICATION

(11) **EP 3 751 634 A1**
(43) Date of publication of application: **16.12.2020**
(21) Application number: 19747642.7
(22) Date of filing: 15.01.2019
(51) Int. Cl.: H01M 2/10, H01M 2/02, H01M 10/613, H01M 10/625, H01M 10/627, H01M 10/643, H01M 10/647, H01M 10/653

(54) **BATTERY HOLDER AND BATTERY PACK**

(30) Priority: 05.02.2018 JP 2018017874
(71) Applicant: Dai-Ichi Kogyo Seiyaku Co., Ltd., Kyoto 600-8873 (JP)
(72) Inventor: NISHIKAWA, Akiyoshi, kyoto-shi, Kyoto 600-8873 (JP); HIGASHIZAKI, Tetsuya, kyoto-shi, Kyoto 600-8873 (JP); ISHINO, Mana, kyoto-shi, Kyoto 600-8873 (JP); KITAGAWA, Takashi, kyoto-shi, Kyoto 600-8873 (JP); AKAO, Toshikazu, kyoto-shi, Kyoto 600-8873 (JP)
(74) Representative: Hoffmann Eitle
(86) International application number: PCT/JP2019/000862
(87) International publication number: WO 2019/150932

(57) **Abstract**

Provided are a battery holder that enables efficient production of a battery pack of excellent quality, and a battery pack using the battery holder. A battery holder 10 includes at least a tubular body having a through-space (battery storage portion 10a) for storing a battery, such as a lithium-ion battery 20, inside. This tubular body is formed of a resin composition containing an inorganic filler.

## Description

### Technical Field

The present invention relates to a battery holder for use in aligning multiple batteries, and a battery pack using the battery holder.

### Background Art

Lithium-ion batteries have been widely used as a power source for, for example, portable electronic devices due to advantages such as being rechargeable secondary batteries, being compact and lightweight, and having a large storage capacity per unit volume or unit weight. Additionally, electric devices that consume more electricity than portable electronic devices, such as electric wheelchairs, electric light vehicles, and electric automobiles; and residential (household) storage batteries, have become more widespread. Thus, lithium-ion batteries are also being used in these devices and storage batteries.

As a technique for handling higher power consumption, a battery pack that integrates multiple batteries is known. Such battery packs conventionally use, for example, a battery holder with multiple recesses or spaces that fit the contour of the batteries, so that the batteries can be lined up in parallel. Such battery holders enable adjacent batteries to be aligned and held with a gap between them, thereby reducing thermal propagation between batteries (the phenomenon in which heat generated by a battery spreads across other batteries).

In addition to battery packs using battery holders, battery packs using a potting material (potting resin) in filling the space between batteries are also known. For example, PTL 1 discloses a battery pack that contains an array of cylindrical batteries, the gaps between which are filled with a potting resin portion.

Although the battery holder can increase the distance between adjacent batteries, it can hold fewer batteries per unit volume when viewed as a whole battery pack, thus resulting in decreased energy density. The battery pack disclosed in PTL 1 prevents a decrease in energy density by forming a potting resin portion filled with a potting material, instead of a battery holder, to keep the distance between batteries close to 1.0 mm or less. Additionally, the potting resin portion tightly adheres to the side of the batteries; thus, heat generated by a battery is dispersed throughout the potting resin portion to reduce thermal propagation.

### Citation List

### Patent Literature

PTL 1: JP2012-028244

### Summary of Invention

### Technical Problem

A battery pack production method using a potting material typically aligns batteries to form a module; places the module in a container such as a mold; and then injects a liquid potting material into the mold, followed by curing the potting material. Thus, when adding the potting material, the following problems arise: it is difficult to control the potting material for filling the gaps between batteries so as to have a uniform thickness; it is also not easy to fill the gaps with the potting material without containing bubbles; and the potting material may flow into areas that do not need to be filled with the potting material. These problems in adding the potting material may affect the quality of the obtained battery pack.

When curing the potting material, the following problems associated with curing also arise: heat is required to cure the liquid potting material, and a predetermined curing time is required to cure the potting material. These problems in curing may affect the production cost or production efficiency of battery packs. Additionally, the resulting battery pack is not easy to inspect, because the cured potting material fills the gaps between the batteries.

The present invention was made to solve these problems. An object of the invention is to provide a battery holder that enables efficient production of a battery pack of excellent quality, and a battery pack using the battery holder.

### Solution to Problem

The battery holder according to the present invention, in order to solve the problems described above, includes at least a tubular body having a through-space for storing a battery inside, wherein the tubular body is formed of a resin composition containing an inorganic filler.

This configuration enables the production of a battery pack by simply attaching a battery holder in the form of a tubular body (tube) to the side of a battery, and aligning and grouping several of such battery holders. Thus, this configuration can improve production efficiency compared with filling with a liquid potting material. Moreover, such battery holders, due to the form of a tubular body, can improve the precision of the distance between batteries, compared with filling with a liquid potting material.

This configuration also eliminates the need for using a liquid potting material, and thus eliminates the need for taking measures to prevent the potting material from containing bubbles or flowing into areas in which the potting material is unnecessary. Moreover, because it is unnecessary to cure the liquid potting material, equipment such as a mold or a heating means (or a mixing means if the potting material is a two-component mixture type) is unnecessary, and curing time is also unnecessary. This not only improves the production efficiency of battery packs, but also suppresses an increase in production costs.

This configuration also enables the battery holder, which is a tubular body, to substantially adhere to the side of the battery, because the battery holder is attached to the battery. Because the battery holder is formed of a resin and contains an inorganic filler, the battery holder can dissipate heat from the battery well; additionally, because the tubular bodies in the battery pack adhere to each other, the battery holder can also disperse heat from the battery throughout adjacent tubular bodies in the same manner as the potting material.

Additionally, this configuration makes it easier to form spaces in which no resin is present, when multiple batteries having battery holders attached (holder-attached batteries) are grouped and aligned. For example, if the battery is cylindrical, the battery holder can also be formed in a tubular shape. Thus, grouping multiple holder-attached batteries inevitably forms spaces between adjacent cylinders. This can reduce the weight of the resin compared with filling with a potting material, and can thus reduce the weight of the battery pack.

Additionally, this configuration enables inspection of the obtained battery pack simply by observing the appearance thereof, because the battery pack is prepared only by grouping and aligning multiple holder-attached batteries. Moreover, when a battery pack is produced, the arrangement or grouping of holder-attached batteries can be adjusted, for example, so as to match the shape of the package of the battery pack. This improves the versatility, application, and design of the battery pack in the production of the battery pack.

In the battery holder of the configuration described above, the content of the inorganic filler in the resin composition may be 30 to 95 mass% based on the total amount of the resin composition taken as 100 mass%.

In the battery holder of the configuration described above, the tubular body may have a thickness of 0.5 to 3.0 mm.

In the battery holder of the configuration described above, the ratio of the maximum width of the through-space of the tubular body to the maximum width of the battery may be 60% to 100%.

In the battery holder of the configuration described above, the resin composition may contain, as a resin component, at least one resin selected from the group consisting of urethane resins, epoxy resins, silicone resins, phenol resins, unsaturated polyester resins, and melamine resins.

In the battery holder of the configuration described above, the inorganic filler may be at least one member selected from the group consisting of divalent or trivalent metal hydroxides, divalent metal sulfate hydrates, oxoacid salts of zinc, silica, alumina, dawsonite, and sodium hydrogen carbonate.

In the battery holder of the configuration described above, the resin composition may contain a urethane resin as the resin component, and a divalent or trivalent metal hydroxide as the inorganic filler.

The battery pack according to the present invention includes one or more battery holders of the configuration described above.

### Advantageous Effects of Invention

Due to the configuration described above, the present invention provides a battery holder that enables efficient production of a battery pack of excellent quality and a battery pack using the battery holder.

### Brief Description of Drawings

Fig. 1 illustrates a contrast view between a schematic perspective view, a schematic top view, and a schematic cross-sectional view of an example of battery holders of a typical configuration according to the present invention.
Fig. 2 illustrates a contrast view between a schematic cross-sectional view and a schematic top view of an example of a battery stored in the battery holder shown in Fig. 1 (holder-attached battery).
Fig. 3A and Fig. 3B illustrate schematic top views of examples of a minimum unit of multiple holder-attached batteries as shown in Fig. 2 that together constitute a battery pack.
Fig. 4A to Fig. 4G illustrate schematic diagrams showing typical steps in an example of the method for forming the holder-attached battery shown in Fig. 2 by storing a battery in the battery holder shown in Fig. 1.

### Description of Embodiments

The following describes a representative embodiment of the present disclosure with reference to drawings. Below, identical or equivalent elements in all figures are indicated with the same reference numeral, and overlapping explanations for such elements are omitted.

### Battery Holder and Holder-Attached Battery

The battery holder according to the present disclosure is a tubular body that has a through-space for storing a battery inside, and may be formed of a resin composition containing an inorganic filler. The specific configuration of the tubular body is not particularly limited, and can be any tubular body with a through-space that fits the shape of the battery to be stored.

The type of battery to be stored in the present disclosure is not particularly limited, and includes various known batteries. Specifically, the battery to be stored in the present disclosure includes secondary batteries such as lithium-ion batteries, nickel-cadmium batteries, and nickel-hydrogen batteries. Of these, lithium-ion batteries are particularly preferable. The shape of the battery to be stored in the present disclosure typically includes, although not particularly limited to, a cylindrical shape (column), a square shape (quadrangular prism or rectangular parallelepiped), and any other longitudinal shape such as a pillar shape.

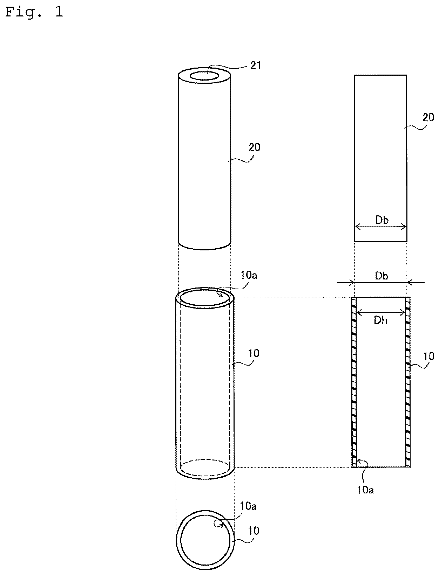

An example of specific configurations of the battery holder according to the present disclosure will be described with reference to a cylindrical lithium-ion battery as a battery to be stored. As illustrated in Fig. 1, a battery holder 10 according to this embodiment of the present disclosure is a tube (tubular body) that has a circular cross-section; and the body part of the tube (wall portion) of the battery holder 10 has a predetermined thickness, as will be described below. Inside the battery holder 10, a battery storage portion 10a for storing a cylindrical lithium-ion battery 20 is formed. This battery storage portion 10a is a cylindrical through-space that has a shape similar to that of the lithium-ion battery 20.

In the example illustrated in Fig. 1, a perspective view of the cylindrical lithium-ion battery 20 is shown above a perspective view of the cylindrical battery holder 10 such that the cylindrical lithium-ion battery 20 corresponds to the battery holder 10; and a top view (or bottom view) of the battery holder 10 is shown below the perspective view of the cylindrical battery holder 10. On the right side of the perspective view of the battery holder 10, a cross-sectional view of the battery holder 10 is also shown. A side view of the cylindrical lithium-ion battery 20 is shown above the cross-sectional view of the battery holder 10 such that the side view corresponds to the cross-sectional view.

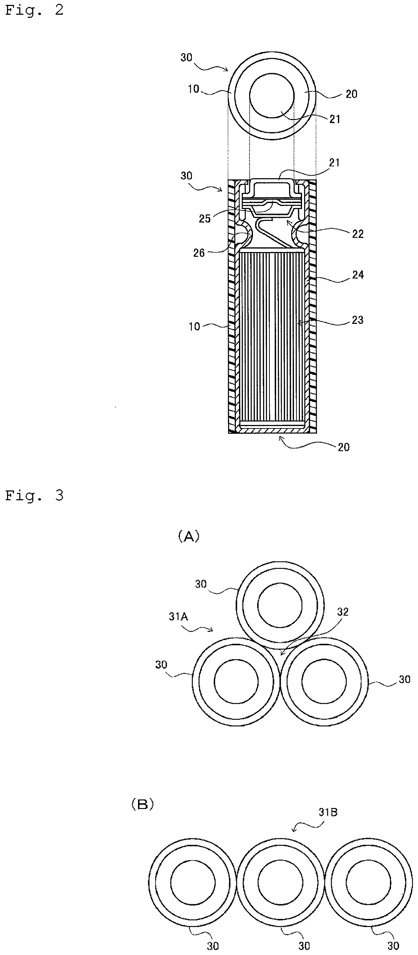

When the lithium-ion battery 20 is stored in the battery storage portion 10a of the battery holder 10 (in other words, when the battery holder 10 is attached to the side of the lithium-ion battery 20), the upper and lower ends of the lithium-ion battery 20 are exposed at the upper and lower ends of the battery holder 10, as shown in Fig. 2. For convenience of explanation, the lithium-ion battery 20 to which the battery holder 10 is attached will be referred to as "holder-attached battery 30."

Fig. 2 illustrates a schematic cross-sectional view of the holder-attached battery 30 (the lower diagram of Fig. 2), and a corresponding top view (the upper diagram of Fig. 2). The cylindrical lithium-ion battery 20 typically has a terminal cap 21 exposed at the upper end of the battery, as shown in the perspective view of the lithium-ion battery 20 in Fig. 1 (the upper-left diagram of Fig. 1). As shown in Fig. 2, the lithium-ion battery 20 is provided with a sealing body 22 that includes the terminal cap 21 at the top of the lithium-ion battery 20. The lithium-ion battery 20 is also provided with a group of electrodes 23 at the lower part thereof (i.e., below the sealing body 22). The sealing body 22 and the group of electrodes 23 are enclosed (stored) in an outer body 24.

Although the specific configuration of the sealing body 22 is not particularly limited, the cylindrical lithium-ion battery 20 typically includes, for example, a metal filter, a gasket, a metal valve body, and a gas vent valve 25, in addition to the terminal cap 21. The gas vent valve 25 dissipates gas generated inside the lithium-ion battery 20 to the exterior when the internal pressure is increased by the gas. In the schematic diagram shown in Fig. 2, the gas vent valve 25 is provided at the bottom part of the terminal cap 21 as part of the sealing body 22.

The group of electrodes 23 includes, for example, sheet-like cathode and anode materials, film-like separators, and current collectors. The cathode and anode materials are individually sandwiched by the separator and superimposed on each other, and wound in a spiral shape. The cathode material and the anode material are each electrically connected to the current collector. The outer body 24 is cylindrical in shape, with a bottom formed at the lower end and an opening at the upper end; and is typically made of metal. The group of electrodes 23 is stowed in the lower part of the outer body 24; and an anode current collector provided to the group of electrodes 23 is electrically connected, for example, to the bottom surface of the outer body 24.

After the group of electrodes 23 is stored, an electrolyte is injected through the opening at the upper end of the outer body 24, and then the sealing body 22 is stored on the upper part of the group of electrodes 23. At this time, the cathode current collector of the group of electrodes 23 is electrically connected to the metal filter provided to the sealing body 22. In the cylindrical lithium-ion battery 20, as schematically shown in Fig. 2, the outer body 24 is processed to protrude inward in a frame shape, thereby forming a seating portion 26 for positioning the sealing body 22. The opening at the upper end of the outer body 24 is sealed by attaching the sealing body 22 to this seating portion 26. Then, the opening at the upper end of the outer body 24 is closed such that the upper surface of the terminal cap 21 is exposed, thereby hermetically sealing the sealing body 22, the group of electrodes 23, and the electrolyte inside the outer body 24.

The internal configuration of the lithium-ion battery 20 shown in Fig. 2 is an example, and the configuration of a cylindrical battery to which the battery holder 10 according to the present disclosure is attached is not limited thereto. For example, a square battery, rather than a cylindrical battery, can have a known internal configuration of square lithium-ion batteries. A lithium ion battery with a shape other than a cylindrical or square shape can have an internal configuration known for the shape thereof. A battery other than lithium-ion batteries can have a known internal configuration.

Although not shown, the outer surface of the cylindrical lithium-ion battery 20 (the side of the outer body 24) may be coated with a known resin sheet. Additionally, the outer body 24 may be provided with a coating layer (cover) of resin on the outer side thereof in addition to a metallic main body. Alternatively, the outer body 24 itself may be made of resin, rather than metal, depending on the internal configuration of the lithium-ion battery 20. The battery holder 10 according to the present disclosure is different from the resin sheet, the coating layer, and the resin outer body 24 that may be provided to the outer surface of the lithium-ion battery 20; and is attached to the lithium-ion battery 20 afterwards.

In the holder-attached battery 30 shown in Fig. 2, the battery holder 10 in the form of tubular body (tubular) is simply attached to the outer surface of the lithium-ion battery 20. Thus, a battery pack can be produced simply by aligning several of such holder-attached batteries 30, as described later. Thus, the holder-attached battery can improve production efficiency compared to filling a battery pack with a liquid potting material as in conventional battery packs.

As stated above, the battery holder 10 may be formed of a resin composition containing an inorganic filler. The specific formulation of this resin composition (and the inorganic filler) will be described later. The battery holder 10 may be a tubular body (tube) formed of a resin composition, and the thickness of this tubular body (the thickness of a tubular resin wall portion) is not particularly limited. In a preferable embodiment, the battery holder 10 ensures predetermined spacing to reduce heat propagation of, for example, fire between adjacent lithium-ion batteries 20. Thus, the thickness of the tubular body (wall portion) can be suitably determined according to the distance between the lithium-ion batteries 20 (distance between batteries).

The thickness of the tubular body may be typically within the range of 0.5 to 3.0 mm. The upper limit may be 2.0 mm or less, or 1.5 mm or less. A lower limit of 0.5 mm enables adjacent lithium-ion batteries 20 to have a minimum distance (the minimum distance between batteries) of about 1.0 mm when the holder-attached batteries 30 are adjacent to each other. This can suppress thermal propagation well. Of course, if the minimum distance can be less than 1.0 mm, the thickness of the tubular body may be less than 0.5 mm.

A tubular body with a thickness of 3.0 mm or less can optimize the number of batteries that can be stored per unit volume of the battery pack, although this depends on various conditions, such as the type of lithium-ion battery 20 and the specific configuration of the battery pack. This can effectively prevent the decline in energy density of the battery pack. Naturally, a tubular body with a thickness of more than 3.0 mm can even prevent a decrease in energy density of the battery pack in some cases, depending on the conditions. In such a case, for example, the thickness of the tubular body can be determined with priority given to the suppression of thermal propagation. Thus, being a tubular body of a uniform thickness, the battery holder 10 can improve the accuracy of spacing between batteries, compared to filling with a liquid potting material as in conventional battery packs.

The through-space in the battery holder 10 (i.e., battery storage portion 10a) may be designed as a space that fits the shape of the battery to be stored (in this embodiment, the cylindrical lithium-ion battery 20). In the present embodiment, as shown in Fig. 1, the diameter of the battery storage portion 10a (i.e., the inner diameter Dh of the tubular body (battery holder 10)) may be the same as the diameter (outer diameter) Db of the lithium-ion battery 20; however, it is preferably smaller than the diameter Db (Dh ≤ Db).

As will be described below, the tubular body is preferably configured to have elasticity or flexibility. If the tubular body is elastic or flexible, setting the inner diameter Dh of the tubular body to be smaller than the outer diameter Db of the lithium-ion battery 20 enables the inner surface of the battery holder 10 to adhere to the outer surface of the lithium-ion battery 20 when the battery holder 10 is attached to the lithium-ion battery 20. Due to the presence of an inorganic filler, the battery holder 10 (tubular body) can dissipate (diffuse) the heat generated by the lithium-ion battery 20. In this case, excellent adhesion of the inner surface of the battery holder 10 to the outer surface of the lithium-ion battery 20 can improve heat dissipation efficiency.

Although the lithium-ion battery 20 is cylindrical in this embodiment, the shape of the battery to which the battery holder 10 is attached in the present disclosure can be various shapes, such as a square shape, in addition to the cylindrical shape as stated above. If the battery is cylindrical, it is sufficient to compare the outer diameter (diameter) of the battery with the inner diameter (the diameter of the battery storage portion 10a) of the battery holder 10. However, if the battery is not cylindrical, the width of the battery (dimension in the cross-sectional direction) will not be a constant value. Thus, if the battery is not cylindrical, the maximum width of the battery (maximum dimension in the cross-sectional direction) can be used as a reference.

More specifically, the ratio of the maximum width of the through-space of the tubular body (of the battery holder 10) (the diameter of the through-space or the inner diameter of the tubular body when the tubular body is cylindrical) to the maximum width of the battery (the outer diameter or the diameter of the battery when the battery is cylindrical) may be 60 to 100%, preferably 80 to 98%, and more preferably 93 to 97% (95±2%). For convenience of explanation, the maximum width of the through-space of the tubular body relative to the maximum width of the battery is referred to as "holder width ratio"; and when the maximum width is a diameter (when the battery is cylindrical), it is referred to as "holder diameter ratio."

A holder width ratio (holder diameter ratio) of more than 100% means that the maximum width of the through-space of the tubular body is greater than the maximum width of the battery. Thus, the inner surface of the tubular body may not be able to adhere well to the outer surface of the battery. Additionally, the holder-attached battery 30 formed by attracting the battery holder 10 to the battery may become prone to detachment of the battery holder 10 from the battery. As a result, a holder width ratio (holder diameter ratio) of more than 100% cannot effectively suppress thermal propagation in a configured battery pack, and cannot dissipate heat from the battery; and even decreases the structural stability of the battery pack. However, even a holder width ratio of more than 100% may be able to ensure the adhesion or the retention of the battery holder 10 in some cases, depending on the shape of the battery.

The lower limit of the holder width ratio (holder diameter ratio) can be suitably determined according to the material of the tubular body (battery holder 10) (i.e., the components or formulation of the resin composition described later). In other words, the maximum width of the through-space (inner diameter) can be reduced to the smallest width possible, depending on the degree of elasticity or flexibility of the tubular body (resin composition). However, if the holder width ratio is overly small, even a highly flexible tubular body (battery holder 10) may be greatly stretched when being attached to a battery; this may lead to a failure to keep a suitable distance between adjacent batteries (distance between batteries) when a battery pack is formed. From this viewpoint, a typical lower limit of the holder width ratio can be 60% or more, as described above.

If the resin component of the resin composition that constitutes the tubular body contains a urethane resin (a urethane resin composition) as described below, the lower limit is preferably 80% or more, and more preferably 93% or more. Similarly, the upper limit is preferably 98% or less, and the lower limit is more preferably 97%. A tubular body formed of a urethane resin composition with the upper limit or lower limit of the holder width ratio being the value described above can make the adhesion and retention of the battery holder 10 to the battery even better.

Although the tubular body, which is the battery holder 10, is preferably elastic or flexible as described above, specific measurement values for evaluating the elasticity or flexibility (or a test method or measurement method) are not particularly limited. One of the measurement values for evaluating the elasticity or flexibility of a tubular body (resin composition) is the storage modulus at 25°C. In the present disclosure, the storage modulus (25°C) of the tubular body is not particularly limited, but can typically be 0.1 to 200 MPa.

In other words, in the present disclosure, a tubular body (resin composition) with a storage modulus (25°C) within the range of 0.1 to 200 MPa can achieve even better elasticity or flexibility as a battery holder 10. In particular, when the resin composition is a urethane resin composition, the tubular body with a storage modulus within this range can be used as an excellent battery holder 10. Needless to say, the storage modulus (25°C) of the tubular body can be outside this range, because it can be suitably determined according to various conditions.

The length of the tubular body (battery holder 10) (dimension in the longitudinal direction, full length) can be any length, and can be suitably determined according to the length of the battery to be stored. In the case of the cylindrical lithium-ion battery 20, the length of the battery holder 10 may be substantially the same as the length of the lithium-ion battery 20 as illustrated in Fig. 2; or the length of the battery holder 10 may be shorter or longer than the length of the lithium-ion battery 20, depending on the configuration of the battery pack. Because the battery holder 10 is a tubular body formed of a resin composition, it can be suitably cut to a length that corresponds to the length of the battery. Thus, the battery holder 10 according to the present disclosure may be cut to a length that corresponds to the length of the battery beforehand; may be cut to a slightly longer length so that the length can be adjusted when used; or may be configured in the form of a long hose that is wound without being cut, and that may be suitably cut when used.

Additionally, although the battery holder 10 is formed only from a tubular body made from a resin composition in the present embodiment, the present disclosure is not limited to this embodiment; and the battery holder 10 may optionally include members other than the tubular body. In the present embodiment, the tubular body, which is the battery holder 10, has substantially the same cross-sectional dimension (outer and inner diameters) and cross-sectional shape in the longitudinal direction; however, the present disclosure is not limited to this embodiment, and the cross-sectional shape or cross-sectional dimension of the tubular body may be partially different.

### Resin Composition That Constitutes Battery Holder

The resin composition that constitutes the battery holder 10 according to the present disclosure may be any composition that contains a resin component and an inorganic filler. The resin component for suitable use include various resins (polymer or plastic) known in the field of battery packs. Examples of typical resin components include urethane resins, epoxy resins, silicone resins, phenol resins, unsaturated polyester resins, and melamine resins. These resins may be used singly, or in a suitable combination of two or more (e.g., as a polymer blend or polymer alloy).

Additionally, two or more types of resins with different chemical structures, for example, may be used in combination, even if they are of the same type. For example, when the resin component is a urethane resin, two or more urethane resins formed of different combinations of a polyisocyanate and a polyol may be used. Even if the combination of a polyisocyanate and a polyol is the same, two or more types of urethane resins obtained under different synthesis conditions can be used.

For the battery holder 10 of the present disclosure, urethane resins, among the resins described above, may be preferably used as a resin component. As described above, the tubular body (battery holder 10) according to the present disclosure preferably has elasticity or flexibility, and urethane resins with a wide range of elasticity or flexibility can be produced. For example, a range of urethane resins can be produced, from a soft one with a storage modulus of 1 MPa or less at 25°C to a very hard one with a storage modulus of about 2×10³ MPa at 25°C.

The ability of the urethane resins to achieve a wide range of elasticity or flexibility means that the elasticity or flexibility can be controlled as necessary. This makes it possible to obtain a tubular body that has excellent elasticity or flexibility, for example, according to the configuration of the battery holder 10 or the battery pack. Moreover, urethane resins have a relatively lower viscosity when being processed than other resins; and can be cured at room temperature, which eliminates the need for high temperatures. Thus, urethane resins can ensure excellent processability and production efficiency in the production of tubular bodies.

More specific configurations of urethane resins are not particularly limited. For example, polyisocyanates and polyols for use as starting materials for urethane resins can be suitably selected from known polyisocyanates and polyols. For example, polyisocyanates typically include aromatic, alicyclic, or aliphatic polyisocyanates having two or more isocyanate groups, and modified polyisocyanates obtained by modifying these polyisocyanates. These polyisocyanates may be prepolymers. Polyols typically include polyether-based polyols, polyester-based polyols, polyhydric alcohols, and hydroxy-containing-diene-based polymers. These polyisocyanates or polyols may be used singly, or in a suitable combination of two or more. A catalyst for accelerating the resin-forming reaction of a polyisocyanate and a polyol may also be used. Examples of catalysts include amine catalysts, metal compound catalysts, and isocyanurate-forming catalysts. These catalysts may also be used singly, or in a combination of two or more.

The resin composition that constitutes the battery holder 10 contains at least an inorganic filler in addition to the resin component. This inorganic filler can contribute to the flame retardancy or heat dissipation of the tubular body (battery holder 10). Examples of specific inorganic fillers include divalent or trivalent metal hydroxides such as aluminum hydroxide, magnesium hydroxide, and calcium hydroxide; divalent metal sulfates such as calcium sulfate, and magnesium sulfate; oxoacid salts of zinc such as zinc borate, and zinc stannate; silica; alumina; dawsonite; and sodium hydrogen carbonate. These inorganic fillers may be used singly, or in a suitable combination of two or more.

Of the inorganic fillers listed above, a divalent or trivalent metal hydroxide (e.g., aluminum hydroxide or magnesium hydroxide) is preferably used in the battery holder 10 according to the present disclosure. Because a divalent or trivalent metal hydroxide generates water when heated, such a divalent or trivalent metal hydroxide can impart excellent flame retardancy to the tubular body (battery holder 10), and also makes the tubular body excellent in heat dissipation.

The inorganic filler for use can be preferably a divalent metal sulfate, such as calcium sulfate or magnesium sulfate. A divalent metal sulfate is prone to forming a hydrate and thus generates water when heated, in the same manner as divalent or trivalent metal hydroxides. Alternatively, the inorganic filler for use can be preferably sodium hydrogen carbonate. Sodium hydrogen carbonate also produces water when being heated. Additionally, sodium hydrogen carbonate may be used in combination with a divalent or trivalent metal hydroxide. Sodium hydrogen carbonate is relatively inexpensive compared with aluminum hydroxide or magnesium hydroxide. Thus, the use of these materials in combination can reduce an increase in the production costs of the tubular body, while achieving excellent flame retardancy and heat dissipation.

The inorganic filler, in the powder form, can be blended with the resin component. The average particle size of the inorganic filler is, although not particularly limited to, typically 0.5 to 40 µm, and more preferably 2 to 20 µm. The shape of the inorganic filler powder can be any shape; and various shapes, such as spherical, flakey (scaly), needle-like, or irregular shapes, can be used. The method for measuring the average particle size can be any method, and the average particle size can be determined based on particle size analysis by a well-known laser diffraction method.

The resin composition that constitutes the battery holder 10 may contain known additives in addition to the resin component and the inorganic filler. Examples of additives include foaming agents, foam stabilizers, fillers, stabilizers, colorants, flame retardants, and plasticizers; however, the additives are not particularly limited. In the present disclosure, it is in particular important that the tubular body (battery holder 10) is flame retardant, as described above. Thus, the resin composition preferably contains a flame retardant.

Examples of specific flame retardants include, although not particularly limited to, phosphorus-based flame retardants, halogen-based flame retardants, and melamine-based flame retardants. Phosphorus-based flame retardants include halogen-containing phosphates, such as tris(2-chloroethyl) phosphate, tris(2,3-dibromopropyl) phosphate; non-halogen phosphates, such as trimethyl phosphate, tricresyl phosphate, trixylenyl phosphate, and triphenyl phosphate; and ammonium polyphosphate. Halogen-based flame retardants include decabromodiphenyl ether, pentabromodiphenyl ether, hexabromocyclododecane, tetrabromobisphenol A, and hexabromobenzene. Melamine-based flame retardants include melamine cyanurate. Additionally, antimony compounds such as antimony trioxide can also be used as a flame retardant. An antimony compound used in combination with a halogen-based flame retardant can further improve flame retardancy.

The specific formulation of the resin composition that constitutes the battery holder 10 is not particularly limited. In the present disclosure, it is sufficient if the resin composition contains at least two components, i.e., a resin component and an inorganic filler; and the content of the inorganic filler is not specifically limited. Taking into consideration the flame retardancy of the obtained tubular body (battery holder 10), the content (proportion) of the inorganic filler may be 30 to 95 mass% and preferably 45 to 70 mass% based on the total amount of the resin composition (entire resin composition) taken as 100 mass%.

An inorganic filler content of more than 95 mass% may result in a failure to obtain an excellent tubular body due to the overly low content of the resin component in the entire resin composition, depending on the type of resin component. An inorganic filler content of less than 50 mass% may result in a failure to impart excellent flame retardancy or heat dissipation to the tubular body due to the overly low inorganic filler content, depending on the type of inorganic filler or resin component. Naturally, the content of the inorganic filler can be suitably determined according to the desired properties of the resin composition (or tubular body), and is not particularly limited to the ranges described above.

### Battery Pack

The battery pack according to the present disclosure may be any battery pack that contains the battery holder 10 described above, and the specific configuration thereof is not particularly limited. The battery pack according to the present disclosure may be produced by aligning multiple battery holders 10 described above, and then individually storing batteries (e.g., the cylindrical lithium-ion battery 20 illustrated in Fig. 1 or Fig. 2) in the respective battery holders 10. However, as described above, it is preferable to first form the holder-attached battery 30 by attaching the battery holder 10 to the individual battery, and then align several of such holder-attached batteries 30 to produce a battery pack. In this way, the arrangement or grouping of the holder-attached batteries 30 can be adjusted, for example, so as to match the shape of the package of the battery pack. This can improve the versatility, application, and design of the battery pack in the production thereof.

The minimum unit of grouped multiple holder-attached batteries 30 in the production of a battery pack is not particularly limited. For example, as illustrated in Fig. 3(A) or Fig. 3(B), three holder-attached batteries 30 may be grouped together to form a battery pack unit 31A or battery pack unit 31B, which is a minimum unit. For example, the battery pack unit 31A illustrated in Fig. 3(A) is configured as a unit of three holder-attached batteries 30 arranged in parallel, in a triangular shape when viewed from above. This battery pack unit 31A forms a dead space 32 between the three adjacent holder-attached batteries 30.

The lithium-ion battery 20 that constitutes the holder-attached battery 30 is cylindrical, and the battery holder 10 is also tubular; thus, the holder-attached battery 30 also becomes cylindrical. Grouping three of such holder-attached batteries 30 inevitably forms the dead space 32 between the adjacent cylinders. When these holder-attached batteries 30 are viewed as a battery pack, this dead space 32 is a space where no resin is present. Thus, grouping these holder-attached batteries 30 in this manner can reduce the weight of the resin; and thus reduce the weight of the battery pack, compared with conventional battery packs filled with a potting material.

Alternatively, unlike the battery pack unit 31A, the battery pack unit 31B, as illustrated in Fig. 3(B), is configured as a flat plate unit of three holder-attached batteries 30 arranged in line when viewed from above. Unlike the battery pack unit 31A, the battery pack unit 31B forms no dead space 32 in the unit itself. However, when two or more battery pack units 31B are arranged to be adjacent to each other, the dead space 32 is created between three adjacent holder-attached batteries 30, in the same manner as in the battery pack unit 31A. Thus, grouping these holder-attached batteries 30 in this manner can reduce the weight of the resin; and reduce the weight of the battery pack, compared with conventional battery packs filled with a potting material.

Additionally, as described above, the inner diameter of the battery holder 10 (the diameter of the battery storage portion 10a, the maximum width of the through-space) can be preferably set smaller than the outer diameter of the lithium-ion battery 20 (the maximum width of the battery). This enables the battery holder 10, which is a tubular body, to substantially adhere to the side surface of the lithium-ion battery 20, when the battery holder 10 is attached to the lithium-ion battery 20. The battery holder 10 is formed of a resin and contains an inorganic filler as described above. Thus, even if heat is generated from the lithium ion battery 20, the battery holder 10 can dissipate (diffuse) the heat well, and can also disperse heat from any lithium ion battery 20 throughout adjacent holder-attached batteries 30 (battery holders 10); this is because the tubular bodies are adhered to each other in a battery pack, as in the battery pack units 31A and 31B illustrated in Figs. 3(A) and 3(B). This can further improve the heat dissipation effect.

More specific configurations of the battery pack are not particularly limited; and a conventionally known configuration may be suitably used, except for the battery holder 10. For example, it is sufficient if the battery pack includes a housing (case) for storing the battery pack unit 31A or 31B (or holder-attached batteries 30) described above, and a lead member for electrically connecting the batteries to each other. The shape of the housing is not limited to known rectangular parallelepipeds, and the housing can have a relatively complex shape. This is because the battery pack unit 31A or 31B, which is a minimum unit, can be stored so as to fill the inner space of the housing in the present disclosure.

The lead member for use can be in a known configuration that can electrically connect batteries such as the lithium-ion batteries 20 to each other in the stored battery pack unit 31A or 31B. Specific examples include plate members and wiring members. The batteries of the battery pack unit 31A or 31B may be connected to each other with a lead member beforehand, and then multiple battery pack units 31A or 31B may be further connected to each other with a lead member.

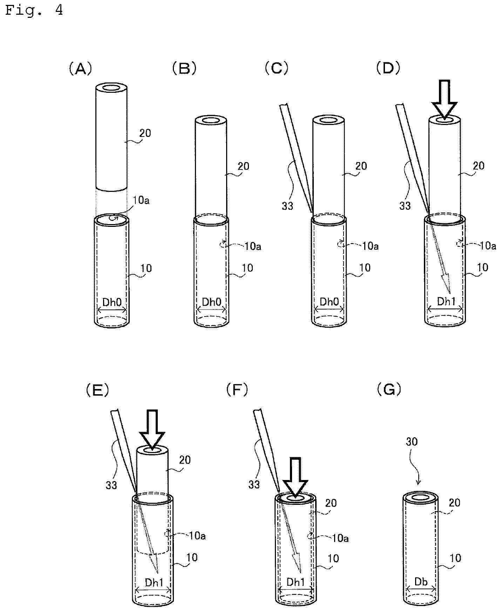

The method for producing (assembling) a battery pack is, although not particularly limited to, for example, a method in which a battery pack unit 31A or 31B or holder-attached batteries 30 are stored in a housing; and then the multiple batteries are connected with a lead member, as described above. The method for producing a battery pack may include the step of forming the holder-attached battery 30 (a method for producing the holder-attached battery 30). The step of forming the holder-attached battery 30 is only to store a battery in the through-space of the battery holder 10 (battery storage portion 10a) as described above. For example, a more efficient step can be a method of blowing air into the through-space, as illustrated in Figs. 4 (A) to 4 (G).

Specifically, the battery holder 10 is placed upright as illustrated in Fig. 4(A), and the bottom end of the lithium ion battery 20 is positioned on the upper surface of the battery holder 10. As described above, the inner diameter Dh of the battery storage portion 10a is smaller than the outer diameter Db of the lithium-ion battery 20 (see Fig. 1). Thus, as illustrated in Fig. 4(B), the lower end of the lithium-ion battery 20 is only placed on the upper end of the battery holder 10 if they are left as is. In Figs. 4(A) and 4(B), the inner diameter of the battery storage portion 10a is indicated as Dh = Dh0.

Next, as illustrated in Fig. 4(c), the tip of an air nozzle 33 is positioned above on the upper end of the battery holder 10 on which the lower end of the lithium-ion battery 20 is placed. In this state, the tip of the air nozzle 33 is positioned between the lower end of the lithium-ion battery 20 and the upper end of the battery holder 10, and is directed toward the battery storage portion 10a in the battery holder 10. In this state, as illustrated in Fig. 4(C), the inner diameter of the battery storage portion 10a remains Dh = Dh0.

Next, as illustrated in Fig. 4(D), air is jetted from the air nozzle 33 to blow it from the gap between the lower end of the lithium-ion battery 20 and the upper end of the battery holder 10 into the battery storage portion 10a. When the battery holder 10 has excellent elasticity or flexibility as described above, the battery holder 10 expands when air is blown in. As a result, the inner diameter Dh of the battery storage portion 10a expands from the initial Dh0 to Dh1 (Dh1>Dh0). When the inner diameter Dh is Dh1, the inner diameter is greater than the outer diameter Db of the lithium-ion battery 20 (Dh1>Db). In this state, a force is applied from the upper end of the lithium-ion battery 20 downward, as indicated by the block arrow in the figures.

This allows the lithium-ion battery 20 to be readily inserted into the battery storage portion 10a whose inner diameter Dh is enlarged, as illustrated in Figs. 4(E) and 4(F). At this stage, the blowing of air from the air nozzle 33 into the battery storage portion 10a is continued. When the blowing of air is ended afterwards, the battery holder 10 is released from expansion. Thus, as illustrated in Fig. 4(G), the battery holder 10 firmly adheres to the outer surface of the lithium-ion battery 20 stored in the battery storage portion 10a, forming the holder-attached battery 30. Because the outer diameter of the lithium-ion battery 20 is Db, the inner diameter of the battery storage portion 10a corresponds to the outer diameter Db of the battery in Fig. 4(G).

As described above, when the battery holder 10 is a tubular body and has elasticity or flexibility, the tubular body expands when air is blown into the through-space in the tubular body. This can maintain the inner diameter (maximum width) of the through-space greater than the outer diameter (maximum width) of the battery. Thus, the battery can be easily and quickly stored in the battery holder 10. Additionally, expansion is released when air-blowing is ended, and the battery holder 10 can thus adhere well to the outer surface of the battery. This can form the holder-attached battery 30 efficiently, thus improving the production efficiency of the battery pack.

In the holder-attached battery 30, the upper end and lower end of the lithium-ion battery 20 are exposed at the upper end and lower end of the battery holder 10, as illustrated in Fig. 4(G) and Fig. 2. In other words, the battery holder 10 formed of a resin composition is attached only on the outer side of the lithium-ion battery 20 in the holder-attached battery 30. Thus, for example, the holder-attached battery 30 can prevent a resin from adhering to the upper end thereof at which a gas vent valve 25 is located, unlike conventional battery packs using a potting material. In conventional battery packs using a liquid potting material, the potting material can flow into areas where the potting material is unnecessary, and may stick to the upper end or other parts of the battery.

When the battery is the lithium-ion battery 20, a defect in the battery may cause a portion of the electrolyte to decompose and produce gas, thereby increasing the internal pressure of the battery. This is why the gas vent valve 25 is provided at the sealing body 22 of the lithium ion battery 20, as described above. If the internal pressure of the battery rises beyond a predetermined value, the gas vent valve 25 is opened. This allows the internal gas to be released toward the exterior, thereby avoiding an increase in the internal pressure of the battery. However, a resin, such as a potting material, stuck on the upper end of the lithium-ion battery 20 may result in the gas vent valve 25 being unable to operate properly, thus hampering the proper release of the internal gas.

In the present disclosure, the battery holder 10 may be positioned only on the outer side of the lithium-ion battery 20. This can substantially eliminate the possibility that the gas vent valve 25 may not operate properly due to improper adhesion of the potting material.

Additionally, when a potting material is used, the potting material injected into the battery pack may contain bubbles. The cured potting material with bubbles contained may affect the properties of the potting material. Additionally, a frame or mold is necessary to control the flow of the potting material in order to prevent the potting material from sticking to areas that do not need the potting material, such as the upper end of the battery. Additionally, a heating means is also necessary to cure a liquid potting material by heating; or a mixing means is necessary to prepare a potting material, if the potting material is a two-component mixture-type potting material.

In contrast, the present disclosure simply attaches the battery holder 10, which is a tubular body, to the side of the battery, without using a liquid potting material. Thus, the present disclosure not only eliminates the need for a frame, a mold, a heating means, or a mixing means, but also eliminates the need for curing time to cure the potting material. Thus, the present disclosure can improve production efficiency in the production of battery packs, and can also suppress an increase in production costs.

### Examples

The present invention will be described in more detail with reference to Examples and a Comparative Example. However, the present invention is not limited to these Examples. A person skilled in the art may make various changes, modifications, and alterations without deviating from the scope of the invention. The fire resistance test in the following Examples was performed as follows.

### Fire Resistance Test

A battery holder of the Examples or Comparative Example was attached to the side of a 18650 lithium-ion battery (discharge capacity: 3Ah) to prepare a holder-attached battery. Three holder-attached batteries as thus prepared were aligned in parallel, and fixed to prepare a test battery pack.

Of the three holder-attached batteries in the test battery pack, a holder-attached battery at one end was pierced from the side thereof with an N45 iron nail at a rate of 30 mm/second to the point that the nail penetrated the battery. The holder-attached battery through which the iron nail was pierced is referred to as "heat source battery," and the holder-attached battery adjacent to the heat source battery (the holder-attached battery in the middle) is referred to as "adjacent battery." While the temperature of the adjacent battery was measured under a 25°C-environment, whether the spread of fire from the heat source battery to the other holder-attached batteries occurs was investigated. A case of no spread of fire was rated as "A," and a case in which spread of fire occurred was rated as "B."

### Example 1

A resin composition with an inorganic filler content of 65 mass% was prepared (produced) using a urethane resin (trade name: Eimflex EF-243, produced by DKS Co., Ltd.) as a resin component, and aluminum hydroxide as an inorganic filler. The resin composition was used to prepare (produce) three types of tubular bodies with a holder diameter ratio of 95%, and a thickness of 1.5 mm, 1.0 mm, or 0.5 mm. These battery holders are of Example 1. The distance between adjacent lithium-ion batteries (the distance between batteries) in a test battery pack composed of these battery holders is 3.0 mm, 2.0 mm, or 1.0 mm. These battery holders of Example 1 were subjected to the fire resistance test as described above. Table 1 shows the results (the temperature of the adjacent battery and evaluation of spread of fire).

### Example 2

Three types of tubular bodies with different thicknesses were prepared in the same manner as in Example 1, except that magnesium hydroxide was used as an inorganic filler. These battery holders are of Example 2. These battery holders were subjected to the fire resistance test as described above. Table 1 shows the results.

### Example 3

Three types of tubular bodies with different thicknesses were prepared in the same manner as in Example 1, except that magnesium sulfate hydrate was used as an inorganic filler. These battery holders are of Example 3. These battery holders were subjected to the fire resistance test as described above. Table 1 shows the results.

### Example 4

Three types of tubular bodies with different thicknesses were prepared in the same manner as in Example 1, except that calcium sulfate hydrate was used as an inorganic filler. These battery holders are of Example 4. These battery holders were subjected to the fire resistance test as described above. Table 1 shows the results.

### Example 5

Three types of tubular bodies with different thicknesses were prepared in the same manner as in Example 1, except that a 1:1 mixture of aluminum hydroxide and sodium hydrogen carbonate was used as an inorganic filler. These battery holders are of Example 5. These battery holders were subjected to the fire resistance test as described above. Table 1 shows the results.

### Example 6

Three types of tubular bodies with different thicknesses were prepared in the same manner as in Example 1, except that a 1:1 mixture of magnesium hydroxide and sodium hydrogen carbonate was used as an inorganic filler. These battery holders are of Example 6. These battery holders were subjected to the fire resistance test as described above. Table 1 shows the results.

### Example 7

Three types of tubular bodies with different thicknesses were prepared in the same manner as in Example 1, except that sodium hydrogen carbonate was used as an inorganic filler. These battery holders are of Example 7. These battery holders were subjected to the fire resistance test as described above. Table 1 shows the results.

### Comparative Example

Two types of tubular bodies with a thickness of 1.5 mm or 1.0 mm were prepared in the same manner as in Example 1, except that no inorganic filler was added (i.e., only the urethane resin was used). The battery holders are of the Comparative Example. These battery holders were subjected to the fire resistance test as described above. Table 1 shows the results.

**Table 1**

| | Inorganic Filler | Distance between Batteries (mm) | Thickness (mm) | Temperature of Adjacent Battery (°C) | Evaluation on Fire Spread |
|---|---|---|---|---|---|
| Example 1 | Aluminum Hydroxide | 3.0 | 1.5 | 97 | A |
| | | 20 | 1.0 | 110 | A |
| | | 1.0 | 0.5 | 122 | A |
| Example 2 | Magnesium Hydroxide | 3.0 | 1.5 | 105 | A |
| | | 20 | 1.0 | 115 | A |
| | | 1.0 | 0.5 | 125 | A |
| Example 3 | Magnesium Sulfate Hydrate | 3.0 | 1.5 | 106 | A |
| | | 2.0 | 1.0 | 120 | A |
| | | 1.0 | 0.5 | 125 | A |
| Example 4 | Calcium Sulfate Hydrate | 3.0 | 1.5 | 99 | A |
| | | 2.0 | 1.0 | 110 | A |
| | | 1.0 | 0.5 | 129 | A |
| Example 5 | Aluminum Hydroxide: Sodium Hydrogen Carbonate = 1:1 | 3.0 | 1.5 | 99 | A |
| | | 2.0 | 1.0 | 110 | A |
| | | 1.0 | 0.5 | 129 | A |
| Example 6 | Magnesium Hydroxide: Sodium Hydrogen Carbonate = 1:1 | 3.0 | 1.5 | 99 | A |
| | | 2.0 | 1.0 | 110 | A |
| | | 1.0 | 0.5 | 129 | A |
| Example 7 | Sodium Hydrogen Carbonate | 3.0 | 1.5 | 105 | A |
| | | 2.0 | 1.0 | 115 | A |
| | | 1.0 | 0.5 | 125 | A |
| Comparative Example | (No inorganic filler is contained) | 3.0 | 1.5 | 500°C or higher | B |
| | | 2.0 | 1.0 | 500°C or higher | B |

### Comparison Between Examples 1 to 7 and Comparative Example

As is clear from the results of Examples 1 to 7, the battery holders of the Examples do not cause spread of fire in the fire resistance test, and achieve excellent flame retardancy and heat dissipation. On the other hand, the battery holder of the Comparative Example, due to lack of an inorganic filler, failed to achieve excellent flame retardancy and heat dissipation (fire spread from the heat source battery to not only the adjacent battery, but also to the remaining battery).

### Example 8

A tubular body that has an outer diameter identical to that of the 18650 lithium-ion battery (i.e., a holder diameter ratio of 100%) was prepared using the resin composition prepared in Example 1. This tubular body is a battery holder of Example 8. The battery holder was then attached to the side of the 18650 lithium-ion battery by blowing air into the holder (see Figs. 4(A) to 4(G)). The workability during attachment of the battery holder was evaluated, and the adhesion of the battery holder to the side of the battery was also visually evaluated. Table 2 shows the results.

Regarding the workability in attachment, the battery holder was rated as "A" if the battery holder was easy to attach; "B" if the battery holder was not easy to attach, but could be attached; and "C" if the battery holder could not be attached. Regarding the adhesion of the battery holder to the outer side of the battery, the battery holder was rated as "A" if no gaps were confirmed; "B" if gaps were confirmed, but adhesion was confirmed as a whole; and "C" if there was a possibility of the battery holder falling off, with many gaps.

### Example 9

A tubular body with an inner diameter of 97.8% relative to the outer diameter of the 18650 lithium-ion battery (i.e., a holder diameter ratio of 97.8%) was prepared using the resin composition prepared in Example 1. This tubular body was a battery holder of Example 9. This battery holder was attached to the side of the 18650 lithium-ion battery, and the workability and adhesion were evaluated in the same manner as in Example 8.

Table 2 shows the results.

### Examples 10 to 12

Tubular bodies with a holder diameter ratio of 95.6%, 89.2%, or 77.0% were prepared, and these tubular bodies were determined to be the battery holders of Example 10, Example 11, and Example 12. These battery holders were attached to the side of the 18650 lithium-ion battery, and the workability and adhesion were evaluated in the same manner as in Example 8. Table 2 shows the results.

### Reference Examples 1 and 2

Tubular bodies with a holder diameter ratio of 104.5% (i.e., the inner diameter is greater than the outer diameter of the 18650 lithium-ion battery) or of 58.8% were prepared. These tubular bodies were the battery holders of Reference Example 1 and Reference Example 2. These battery holders were attached onto the side of the 18650 lithium-ion battery, and the workability and adhesion were evaluated in the same manner as in Example 8. Table 2 shows the results.

**Table 2**

| | **Holder Diameter Ratio** | Workability | Adhesion |
|---|---|---|---|
| Example 8 | **100.0%** | A | A |
| Example 9 | **97.8%** | A | A |
| Example 10 | **95.6%** | A | A |
| Example 11 | **89.2%** | A | A |
| Example 12 | **77.0%** | A | A |
| Referen ce Example 1 | **104.0%** | A | B |
| Referen ce Example 2 | **58.8%** | B | A |

### Comparison Between Examples 8 to 12, and Reference Examples 1 and 2

As is clear from the results of Examples 8 to 12, when the holder diameter ratio is preferably within the range of 60 to 100%, the battery holder can be easily and efficiently attached to a battery (preparation of a holder-attached battery).

When the holder diameter ratio exceeded 100% as in Reference Example 1, the workability was excellent, but gaps were observed in terms of adhesion. However, the battery did not fall off from the battery holder. Additionally, even when the holder diameter ratio was below 60% as in Reference Example 2, the battery holder could be attached onto the battery. In Reference Example 2, the adhesion was excellent; however, the workability was not particularly excellent.

Thus, even if the holder diameter ratio is out of the range of 60 to 100% (Reference Examples 1 and 2), it is still possible to form a holder-attached battery. However, the results reveal that a high-quality holder-attached battery can be easily and efficiently produced by setting the holder diameter ratio preferably within the range of 60 to 100%.

As described above, the present disclosure enables the production of a battery pack by simply attaching a battery holder in the form of a tubular body (tube) to the outer side of a battery, and aligning and grouping several of such battery holders. Thus, the present disclosure can improve production efficiency compared with filling with a liquid potting material. Moreover, such battery holders, due to the form of a tubular body, can improve the precision of the distance between batteries, compared with filling with a liquid potting material.

Because this configuration eliminates the need for using a liquid potting material, this configuration also eliminates the need for taking measures to prevent the potting material from containing bubbles or flowing into areas in which the potting material is unnecessary. Moreover, because it is unnecessary to cure the liquid potting material, equipment such as a mold or a heating means (or a mixing means if the potting material is a two-component mixture type) is unnecessary, and the curing time is also unnecessary. This not only improves the production efficiency of battery packs, but also suppresses an increase in production costs.

This configuration also enables the battery holder, which is a tubular body, to substantially adhere onto the side of the battery, because the battery holder is attached to the battery. Because the battery holder is formed of a resin and contains an inorganic filler, the battery holder can dissipate heat from the battery well; additionally, because the tubular bodies in the battery pack adhere to each other, the battery holder can also disperse heat from the battery throughout adjacent tubular bodies, in the same manner as the potting material.

Additionally, this configuration makes it easier to form spaces in which no resin is present when multiple batteries having battery holders attached (holder-attached batteries) are aligned and grouped. For example, if the battery is cylindrical, the battery holder can also be formed in a tubular shape. Thus, grouping multiple holder-attached batteries inevitably forms spaces between adjacent cylinders. This can reduce the weight of the resin compared with filling with a potting material, and can thus reduce the weight of the battery pack.

Additionally, this configuration enables inspection of the obtained battery pack simply by observing the appearance, because the battery pack is prepared only by grouping and aligning multiple holder-attached batteries. Moreover, when a battery pack is produced, the arrangement or grouping of holder-attached batteries can be adjusted, for example, so as to match the shape of the package of the battery pack. This improves the versatility, application, and design of the battery pack in the production of the battery pack.

The present invention is not limited to the description of the embodiments above, and can be modified in various ways within the scope of the claims. The technical scope of the present invention encompasses different embodiments, and embodiments obtained by suitably combining technical means disclosed in multiple modified examples.

### Industrial Applicability

The present invention can be widely and suitably used in the fields of battery holders and battery packs using battery holders, regardless of the shape or type of the battery.

### Description of the Reference Numerals

- 10:: battery holder
- 10a:: battery storage portion (through-space)
- 20:: lithium-ion battery (battery)
- 21:: terminal cap
- 22:: sealing body
- 23:: a group of electrodes
- 24:: outer body
- 30:: holder-attached battery
- 31:: battery pack unit
- 32:: dead space
- 33:: air nozzle

## Claims

1. A battery holder comprising at least a tubular body having a through-space for storing a battery inside, the tubular body being formed of a resin composition containing an inorganic filler.

2. The battery holder according to claim 1, wherein the content of the inorganic filler in the resin composition is 30 to 95 mass% based on the total amount of the resin composition taken as 100 mass%.

3. The battery holder according to claim 1 or 2, wherein the tubular body has a thickness of 0.5 to 3.0 mm.

4. The battery holder according to any one of claims 1 to 3, wherein the ratio of the maximum width of the through-space of the tubular body to the maximum width of the battery is 60 to 100%.

5. The battery holder according to any one of claims 1 to 4, wherein the resin composition contains, as a resin component, at least one resin selected from the group consisting of urethane resins, epoxy resins, silicone resins, phenol resins, unsaturated polyester resins, and melamine resins.

6. The battery holder according to any one of claims 1 to 5, wherein the inorganic filler is at least one member selected from the group consisting of divalent or trivalent metal hydroxides, divalent metal sulfate hydrates, oxoacid salts of zinc, silica, alumina, dawsonite, and sodium hydrogen carbonate.

7. The battery holder according to claim 6, wherein the resin composition contains a urethane resin as the resin component, and a divalent or trivalent metal hydroxide as the inorganic filler.

8. A battery pack comprising the battery holder of any one of claims 1 to 7.
